Europäisches Patentamt

European Patent Office

Office européen des brevets

(11) Veröffentlichungsnummer: **0 392 166**
**A2**

(12) **EUROPÄISCHE PATENTANMELDUNG**

(21) Anmeldenummer: **90103228.4**

(22) Anmeldetag: **20.02.90**

(51) Int. Cl.⁵: **H04M 1/24, H04R 29/00**

(30) Priorität: **12.04.89 DE 3911980**

(43) Veröffentlichungstag der Anmeldung:
**17.10.90 Patentblatt 90/42**

(84) Benannte Vertragsstaaten:
**AT BE CH DK ES FR GB IT LI NL**

(71) Anmelder: **QUANTE AG**
**Uellendahler Strasse 353**
**D-5600 Wuppertal 1(DE)**

(72) Erfinder: **Heedt, Michael, Dipl.-Ing.**
**Friedrich-Ebert-Strasse 18**

**D-5657 Haan(DE)**
Erfinder: **Brühl, Michael, Dipl.-Ing.**
**Wittelsbacher-Strasse 40**
**D-5040 Brühl(DE)**
Erfinder: **Apfel, Norbert, Dipl.-Ing.**
**Neuenhofer Strasse 18**
**D-5600 Wuppertal 2(DE)**

(74) Vertreter: **Mentzel, Norbert, Dipl.-Phys. et al**
**Patentanwälte Dipl.-Phys. Buse Dipl.-Phys.**
**Mentzel Dipl.-Ing. Ludewig Unterdörnen 114**
**D-5600 Wuppertal 2(DE)**

(54) **Vorrichtung zur Prüfung der elektroakustischen Übertragungseigenschaften von Fernsprechapparaten.**

(57) Bei der Prüfung der elektroakustischen Übertragungseigenschaften wird der Fernsprechapparat an ein Auswertegerät angeschlossen und ein Schallsender verwendet, der akustische Signale für den Sprechteil des Handapparats abgibt. Um eine reproduzierbare, auch unterschiedlichen Typen von Handapparaten gerecht werdende Prüfung zu erhalten, wird vorgeschlagen, einen Schallsender in einer Prüfmuschel anzuordnen, die mit ihrer Muschelöffnung akustisch dicht den Schalleintritt des Sprechteils eines Handapparats umgrenzt, so daß dort zwischen dem Sprechteil und dem Schallsender eine Druckkammer erzeugt wird. Ein Referenzmikrofon ist im Inneren der Druckkammer angeordnet, welches bei jeder Frequenz des Prüfsignals eine Abweichung der Betriebsgrößen von einem vorgegebenen Richtwert feststellt und dem Auswertegerät meldet. Das Auswertegerät liefert daraufhin frequenzweise eine die jeweilige Abweichung kompensierende Regelgröße für den Betrieb des Schallsenders.

FIG. 3

## Vorrichtung zur Prüfung der elektroakustischen Übertragungseigenschaften von Fernsprechapparaten

Die Erfindung bezieht sich auf eine Vorrichtung der im Oberbegriff von Anspruch 1 angegebenen Art. Diese Vorrichtungen dienen vor allem dazu, die Funktionstüchtigkeit des zum Fernsprechapparat gehörenden Handapparats zu überprüfen, der im täglichen Sprachgebrauch als "Hörer" bezeichnet wird.

Bei den bekannten Prüfverfahren (Archiv für technisches Messen, August 1961, S. 171/174, Dipl.-Ing. Martin Gosewinkel "Messung der Eigenschaften von Fernsprechern") beschallte man in einem Fall den Handapparat mit einem sogenannten "künstlichen Mund", doch war dabei eine Regelung des Schalldrucks nicht möglich. In einem anderen Fall erfolgte die Messung in einem Freifeld. Dabei wurde in einer ersten Verfahrensstufe zunächst ohne Handapparat, in einem schalltoten Raum der Schalldruck eines ebenen Schallfelds mit Hilfe eines Referenzmikrofons auf einen definierten Wert eingestellt. Dann, in der zweiten Verfahrensstufe, wurde der Handapparat in das Schallfeld gebracht. Während der Messung wurde mit Hilfe des Referenzmikrofons und einer Regelungsschaltung der Schalldruck auf einem konstanten Wert gehalten. Man verwendete eine schreibende Meßeinrichtung als Auswertegerät und es wurde bei sich stetig ändernder Meßfrequenz gemessen. Nachteilig ist der Platzaufwand der bekannten Vorrichtung sowie die Langwierigkeit des Meßverfahrens. Vor allem aber ergaben sich Störungen bei der Messung durch Fremdschall oder durch rückwirkende Einflüsse im Meßraum.

Bei reinen Vergleichsmessungen zwischen Mikrofonkapseln der gleichen Type war es bekannt, (Bücher der Meßtechnik, Buch V, Dipl.-Ing. Martin Gosewinkel "Messung der Übertragungseigenschaften von Telefonen, Mikrofonen und Fernsprechern", 1953, Seite 48/49), an drei Eingänge einer Druckkammer das zu testende Mikrofon, das Meßmikrofon für den Schalldruck und einen Schallgeber anzuschließen. Es war weder vorgesehen noch möglich, das Meßmikrofon dort inmitten des Druckraums zwischen dem zu testenden Mikrofon und dem Schallgeber anzuordnen. Es handelte sich dabei nicht um eine Vorrichtung, die beim Teilnehmer ohne Zerlegung des Fernsprechapparats ausgeführt werden konnte. Die Meßergebnisse waren wegen Störeinflüssen nicht reproduzierbar.

Der Erfindung liegt die Aufgabe zugrunde, eine schnell und einfach zu bedienende Vorrichtung der im Oberbegriff des Anspruches 1 genannten Art zu entwickeln, die mobil ist und für eine Vielzahl unterschiedlicher Handapparate reproduzierbare Prüfungsergebnisse liefert. Dies wird erfindungsgemäß durch die im Kennzeichen des Anspruches 1 angeführten Maßnahmen erreicht, denen folgende besondere Bedeutung zukommt:

Die Erfindung wendet beim Sprechteil eine Druckkammermessung besonderer Bauart an. Äußere Störeinflüsse sind weitgehend abgeschirmt. Der Schallsender für die akustischen Prüfsignale ist Bestandteil einer Prüfmuschel, die im Meßfall gegen den Sprechteil des Handapparats angedrückt wird und somit zwischen dem Sprechteil und dem Schallsender eine Druckkammer erzeugt. Es liegt dabei eine lösbare Verbindung zwischen der Prüfmuschel und dem Sprechteil des Handapparats vor, die gemäß Anspruch 31 bis 33 am einfachsten als Verschlußband, Spanngurt oder elastischer Ring ausgebildet sein kann. Damit kann auch bei Handapparaten mit sehr unterschiedlicher äuße rer Form eine exakte Messung ausgeführt werden. Die Messung ist aber vor allem deswegen präzise ausführbar, weil das Referenzmikrofon nunmehr inmitten der Druckkammer zwischen der Prüfmuschel und dem Sprechteil angeordnet ist. Das Referenzmikrofon kann nun über das ganze Frequenzband sowohl die Eigenschaften des Schallsenders ermitteln als auch die spezifischen Resonanz und Dämpfungseigenschaften des Raumes erfassen, die von der Gestalt des jeweiligen Sprechteils am zu prüfenden Handapparat abhängig sind. Eine Möglichkeit gemäß Anspruch 2 besteht darin, diese Eigenschaften über das Referenzmikrofon vorab zu ermitteln und in einem Referenzmuster festzuhalten und erst dann, bei den später zu erfaßenden Meßkurven von gleichwertigen Sprechteilen zu berücksichtigen.

Das bringt eine Arbeitsvereinfachung und ein schnelles Meßergebnis, weil nur eine Kalibrierung nötig ist. Eine andere Möglichkeit gemäß Anspruch 3 besteht darin, die Kalibrierung des Schallsenders und die Messung des Sprechteils für jede Frequenz gleichzeitig auszuführen. In diesem Fall sind momentane akustische Störungen eliminiert und man erhält ein genaues Meßergebnis. Man wird dabei ein Referenzmikrofon mit linearem Verhalten benutzen, z. B. ein Kondensator-Electret-Mikrofon. Damit können spezifische Eigenschaften, die zu Überlagerungen oder Auslöschungen des Schalls bei der Messung führen, über die Referenzwerte erfaßt und im Auswertegerät berücksichtigt werden. An einfachsten ist es, Abweichungen der Betriebsgrößen gleich dazu auszunutzen, um über eine entsprechende Regelgröße den Schallsender so zu steuern, daß ein definierter Richtwert beibehalten wird. Ein solcher Richtwert wird insbesondere, gemäß Anspruch 6, der in der Druckkammer sich aufbauende Schalldruck sein. Als Richtwert empfiehlt es sich einen konstanten Schalldruck über die ganze Bandbreite der Prüfsignalfrequenz zu wählen.

Besonders einfach ist es, gleichzeitig einerseits die spezifischen Eigenschaften des Schallgebers und des Druckraums festzustellen und andererseits den Prüfling zu vermessen. Dies erfolgt frequenzweise über die ganze Bandbreite. Dabei ist es vorteilhaft, den Schallsender diskontinuierlich in diskreten Frequenzen arbeiten zu lassen, wie es Anspruch 5 vorschlägt. Daraus erhält man eine ausreichende Zahl von Meßpunkten, umd daraus eine quasi-kontinuierliche Frequenzkurve zu ermitteln. Am Sprechteil des zu prüfenden Handapparats wird ein Bezugsschalldruckpegel erzeugt, wobei die Ankopplung, wie bereits erwähnt, durch die Druckkammertechnik erfolgt. Der Schalldruckpegel dient als Bezugsgröße zur Kalibrierung der Einrichtung. Im Auswertegerät liegt eine intelligente Regeleinrichtung vor, welche den vom Schallsender erzeugten Druckpegel in der ganzen zu prüfenden Bandbreite von ca. 100 Hz bis 10 kHz konstant hält. Die der Schallquelle zugeführten Spannungswerte können anderweitig abgespeichert und erst bei der eigentlichen Messung wieder herangezogen werden. Die Prüfmuschel erzeugt mit der Druckkammer einen schalldichten Abschluß nach außen. Der angekoppelte Prüfling ist räumlich sehr nahe am Referenzmikrofon angeordnet. Obwohl in der Druckkammer eine Umwandlung des Körperschalls in Luftschall stattfindet, ist ein ungünstiger Einfluß von Körperschall nicht zu befürchten, wenn die Regelung und Messung gleichzeitig ausgeführt werden und daher diese Störeinflüsse eliminiert sind.

Man wird das Referenzmikrofon von vorneherein als festen Bestandteil der Prüfmuschel ausbilden, wie Anspruch 7 vorschlägt, und was in den Unteransprüchen 8 bis 12 in verschiedener Weise ausgeführt werden kann. Bemerkenswert ist, daß ein Gitterwerk, gemäß Anspruch 10, nicht nur ein mechanischer Schutz ist, um den Schallsender vor Beschädigungen im Ruhezustand der Prüfmuschel zu schützen, sondern sich auch im Prüfungsergebnis bemerkbar macht. Das Gitterwerk verkleinert den effektiven Druckraum. Die Gitteröffnungen wirken als Schallquellen.

Die besondere Ausbildung des Anlagerings nach Anspruch 14 erzeugt bei unterschiedlicher Form des Sprechteils eines zu prüfenden Handapparats einen schalldichten Abschluß. Sofern man einen solchen Anlagering in einen ablösbaren Aufsatz gemäß Anspruch 15 integriert und dabei eine Palette von verschiedenen, sehr unterschiedlichen Bauformen von Handapparaten angepaßte Aufsatz-Typen bereithält, ergibt sich durch Auswahl des richtigen Aufsatzes eine gute Voranpassung andie jeweils vorliegenden Profilformen des Handapparats.

Vorteilhaft ist es, an die Prüfmuschel ein Gehäuse gemäß Anspruch 19 zu integrieren, weil darin, wie in den Ansprüchen 20 bis 27 näher dargelegt ist, bei günstigen räumlichen Verhältnissen auch weitere zur Durchführung des Meßverfahrens wichtige Bauteile in den Akustikkoppler mit integriert werden können.

In analoger Weise wird man, gemäß Anspruch 28, beim Hörteil des zu prüfenden Handapparats verfahren, was gemäß den Ansprüchen 29 bis 34 weiterentwickelt wird. Die in den vorausgehenden Ansprüchen erläuterten Maßnahmen können sinngemäß beim Hörteil angewendet werden. Weitere Maßnahmen und Vorteile der Erfindung ergeben sich aus den Zeichnungen und der nachfolgenden Beschreibung.

In den Zeichnungen ist die Erfindung in einem Ausführungsbeispiel dargestellt. Es zeigen:

Fig. 1 schematisch die verschiedenen Bestandteile der erfindungsgemäßen Vorrichtung im Anwendungsfall,

Fig. 2 in Seitenansicht einen Bestandteil der erfindungsgemäßen Vorrichtung von Fig. 1 vor ihrer Benutzung,

Fig. 3 in Vergrößerung den Axialschnitt durch den Bestandteil von Fig. 2, woraus der innere Aufbau näher zu ersehen ist und

Fig. 4 einen entsprechenden Axialschnitt durch einen anderen, analogen Bestandteil der Vorrichtung von Fig. 1.

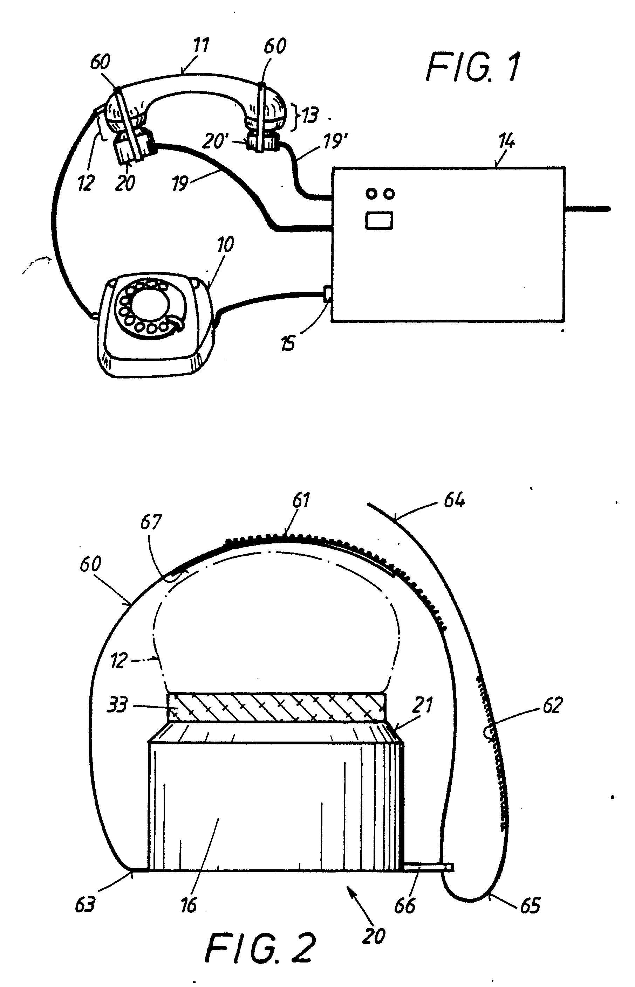

Die erfindungsgemäße Vorrichtung umfaßt ein Auswertegerät 14 mit einer Anschlußstelle 15 für einen Fernsprechapparat 10. Ferner ist das Auswertegerät 14 über Verbindungsleitungen 19, 19′ mit zwei Akustikkopplern 20, 20′ ausgerüstet, die, gemäß Fig. 1, über lösbare Verbinder 60, z.B. spannbare Bänder, einerseits am Sprechteil 12 und andererseits am Hörteil 13 des zugehörigen Handapparats 11 andrückbar sind. Der Handapparat 11 ist vom Fernsprechapparat 10 abgehoben und mit den angeschlossenen Akustikkopplern 20, 20′ frei beweglich, weshalb letztere, unabhängig von der Form des Handapparats 11 einwandfrei angekuppelt werden können.

Der Akustikkoppler 20 umfaßt als wesentlichen Bestandteil eine Prüfmuschel 21, welche die besondere Aufgabe hat, im Gebrauchsfall der Vorrichtung eine Druckkammer 24 mit dem angeschlossenen Sprechteil 12 zu bilden. Diese Prüfmuschel 21 wird nach unten ergänzt durch ein Gehäuse 16, das gegenüber der Druckkammer 24 in sich geschlossen ist, und zwar aus einer Mantelwand 17 und einem diese abschließenden Deckel 18 zusammengesetzt ist. Zwischen den beiden Gehäuseteilen 17, 18 ist die erwähnte Verbindungsleitung 19 des Auswertegeräts 14 über eine dort eingeklemmte Kabelzugentlastung 49 vorgesehen. Im Gehäuseinneren 38 befindet sich zunächst eine Leiterplatte 40, die verschiedene elektronische Bauteile 41 trägt, welche über Leiterbahnen untereinander verbunden sind. Darüber befindet sich ein Schalldämmwerkstoff 37, welcher eine Abschirmung gegenüber einem Schallsender 22 erzeugt, der in einer Bodenwand 25 des Gehäuses 16 befestigt ist, z. B. durch Kleben, aber zugleich wesentlicher Bestandteil der vorerwähnten Prüfmuschel 21 ist. Der Schallsender 22 ist im wesentlichen parallel zur Leiterplatte 40 angeordnet, was platzsparend ist. Der Schallsender 22 liegt auch parallel zu der Muschelöffnung 23, die von einem Ringbereich 32 umgrenzt ist. Dieser Ringbereich 32 dient im Gebrauchsfall zur Anlage des Sprechteils 12 vom Handapparat 11 und besteht aus verformbarem Material, nämlich Moosgummi.

Die Prüfmuschel 21 ist heterogen zusammengesetzt. Sie umfaßt zunächst, wie bereits erwähnt wurde, den Schallsender 22 in der Bodenwand 25, die noch vom Endgehäuse 16 gebildet wird. Doch daran schließt sich eine Wandzone 35 an, die Bestandteil eines Gehäuseaufsatzes 34 ist. Zu Montagezwecken ist die Wandzone 35 mit einem Absatz 45 versehen, wo über Gewindeeingriffe oder Schraubverbindungen sich ein Zusammenhalt mit dem sich daran anschließenden Gehäuse 16 ergibt. In fester Verbindung mit der Wandzone 35 steht der bereits erwähnte, aus Moosgummi bestehende Anlagering 33, der sich beim Anpressen des Sprechteils 12 im Sinne des angedeuteten Pfeils 42 deformieren läßt und dadurch für einen schalldichten Abschluß der Druckkammer 24 sorgt. Um einen statischen Druckausgleich beim Ankoppeln am Handapparat zu erreichen, sind in der Wandzone 35 Kanäle 36 vorgesehen, die eine Verbindung zwischen der Druckkammer 24 und der Umgebung sorgen. Für sehr unterschiedliche Bautypen von Handapparaten 11 kann ein Satz vorangepaßter Aufsätze 34 verwendet werden, von denen jeweils der benötigte durch Aufschrauben, Aufklemmen oder über sonstige Verbindungen auf das Endgehäuse 16 aufgebracht werden kann und damit die benötigte Prüfmuschel 21 erzeugt.

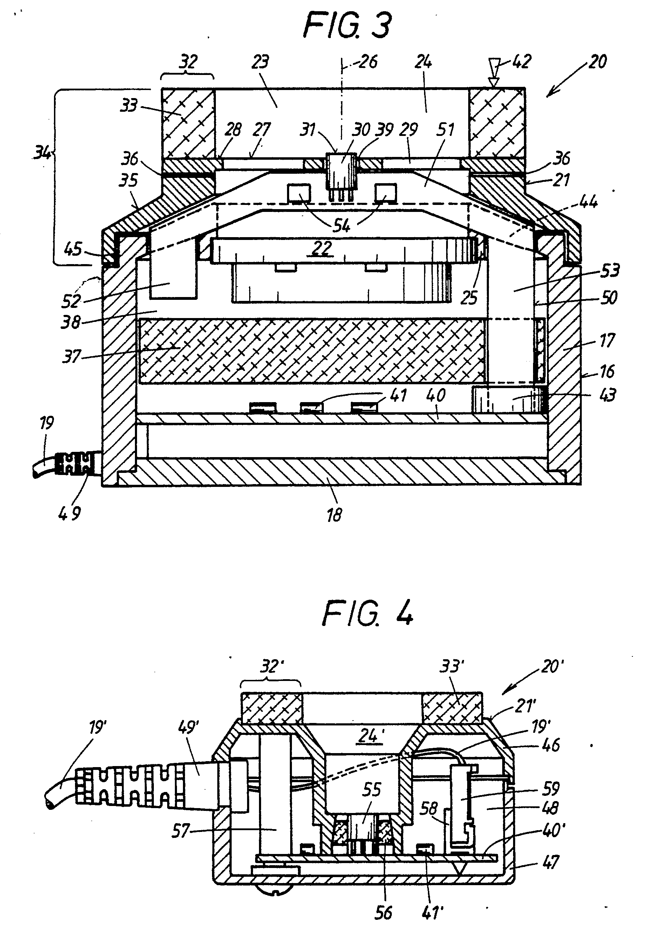

Im Inneren der dabei entstehenden Druckkammer 24 ist ein Referenzmikrofon 30 angeordnet, welches von einer Platine 50 getragen wird. Diese Platine 50 ist hier etwa U-förmig gestaltet und liegt im Montagefall etwa in einer Vertikalebene zur Leiterplatte 40. Diese U-förmige Platine hat einen langen U-Schenkel 53, der über Steckverbindungen 43 mit der Leiterplatte 40 elektrisch verbunden ist und dabei auch seinen mechanischen Zusammenhalt erhält. Der andere Schenkel 52 ist kürzer ausgebildet. Beide Schenkel werden in Radialdurchbrüche 44 im Bereich der Gehäuse-Bodenwand 25 eingeschoben, wobei nicht näher gezeigte Leitrippen im Gehäuseinneren 38 für die weitere Führung und Halterung der Schenkel 52, 53 sorgen. Der zwischen den Schenkeln 52, 53 verlaufende Scheitelsteg 51 kommt dabei auf der Schallaustrittseite des Senders 22 zu liegen und durchsetzt somit die Prüfmuschel 21 diametral. Der Schallsender 22 mit kreisförmigem Umriß liegt darunter, im Muschelboden. Der Platinensteg 51 kann seinerseits Träger von elektronischen Bauteilen 54 sein, die vorzugsweise als RC-Glieder ausgebildet sind und in großer Nähe zum Referenzmikrofon 30 sich befinden. Das Referenzmikrofon 30 ist zum Schallsender 22 konzentrisch angeordnet, wie aus der strichpunktiert in Fig. 3 eingezeichneten Achse 26 zu entnehmen ist. Dabei weist die Meßöffnung 31 zur Muschelöffnung 23 hin, gegen den dort anzudrückenden Sprechteil 12.

Die Druckkammer 24 wird schließlich auch noch von einem Gitterwerk 27 durchsetzt, welches vorzugsweise parallel zur Ebene des Schallsenders 22 angeordnet ist. Dieses Gitterwerk 27 ist hier Bestandteil des Aufsatzes 34 und wird von einer mit Schlitzen 29 ausgerüsteten Trennwand 28 gebildet. Die Schlitze 29 sind in sternförmiger Anordnung zur Längsachse 26 des Akustikkopplers 20 orientiert und umgrenzen einen zentralen Durchbruch 39, in welchen das Referenzmikrofon 30 im Montagefall hineinragt. Die durchbrochene Trennwand 28 des Gitterwerks 27 ist einstückig mit dem Montagering 35 erzeugt, der zur Anbringung des Aufsatzes 34 am Endgehäuse 16 dient. Auch die Druckausgleichskanäle 36 münden in den Bereich unterhalb des Gitterwerks 27. Das Gitterwerk 27 schützt den Schallsender 22 und erzeugt beim Betrieb an seinen Schlitzöffnungen 29 virtuelle Schallquellen. Der Moosgummiring 33 zeichnet sich durch hohe Kompressibilität aus.

Die Leiterplatte 40 mit ihren elektronischen Bauteilen 41 ist Träger der Schaltung dieses Akustikkopplers 20. Im Gehäuseinneren 38 befinden sich somit Strom- und Spannungsverstärker, die Endstufe des Schallgebers 22, Mikrofonverstärker und Signalzuführungsbuchsen. Der Schallsender 22 besteht aus einem Lautsprecher-Chassis mit einer Mylar-Membrane. Über das Refe renzmikrofon 30 wird beim Prüfungsverfahren der Schalldruck in der Druckkammer 24 konstant gehalten. Man arbeitet in einem Frequenzbereich zwischen 100 Hz bis 10 kHz. Das Referenzmikrofon 30 liefert ein Regelsignal an das Auswertegerät 14 zur Linearisierung des Schalldruckverlaufs über die Frequenz. Dabei wird der Raumeinfluß und der Eigenfrequenzgang der Schallquelle 22 ausgeregelt. Die Steckverbindung 43 ist dreipolig.

Auch der am Hörteil 13 von Fig. 1 anschließbare andere Akustikkoppler 20' hat einen, wie Fig. 4 zeigt, ähnlichen Aufbau. Hier wird kein gesonderter, austauschbarer Gehäuseaufsatz benötigt, vielmehr ist die entsprechende Prüfmuschel 21' gleich in den Gehäuseoberteil 46 integriert, wenn auch hier ein Anlagering 33' aus Moosgummi od. dgl. die maßgebliche Anlagefläche 32' erzeugt. Im Gebrauchsfall entsteht daher ebenfalls eine Druckkammer 24', an deren Boden sich ein Meßmikrofon 55 befindet, das zu der Innenwand der Gehäusemuschel 21' mit Dämmwerkstoff 56 umschlossen wird. Dieser Dämmwerkstoff besteht z. B. aus Gummi und dient zur Entkopplung von Körperschall gegenüber dem Mikrofon 55. Zugeich wird damit eine Abdichtung der Druckkammer 24' gegenüber dem hinteren Gehäuseraum 48 erreicht, der durch ein mit dem Gehäuseoberteil 46 abschließbaren Gehäuseunterteil 47 gebildet wird.

Die beiden Gehäuseteile 46, 47 geben dem Akustikkoppler 20' Zylinderform. Im Gehäuseinneren 48 befindet sich auch hier eine Leiterplatte 40', welche elektronische Bauteilen 41' trägt. Zwischen den beiden Gehäuseteilen 47, 48 ist auch hier eine Zugentlastung 49' des zugehörigen Verbindungskabels 19' eingeklemmt. Das Untergehäuse 46 trägt angeformte Stehbolzen 57 zur Befestigung des Gehäuseunterteils 47 mittels Schrauben. Dadurch wird auch die Leiterplatte 40' festgehalten.

Die Leiterplatte 40' umfaßt in ihren Bauteilen 41' Mikrofonverstärker mit umschaltbarer Verstärkung. Zugleich dient die Leiterplatte 40' zum Halten des Mikrofons 55 und trägt Anschlußbuchsen 58 für einen an den Kabelenden der Verbindungsleitung 19 angeschlossenen Stecker 59. Das Mikrofon 55 ist in den ringförmigen dämmenden Körper 56 bei der Montage eingepreßt. Der Anlagering 33' aus Moosgummi paßt sich den Abweichungen der Hörermuscheln am Handapparat 11 leicht an. Da hier geringere geometrische Abweichungen bei den verschiedenen Typen von Handapparaten 11 zu erwarten sind, kann der Anlagering 33' gegenüber demjenigen des zum Sprechteil gehörenden Akustikkopplers 20 dünner ausgebildet sein. Innerhalb des Gehäuseraums 48 sollte auch hier eine Schaumstoff-Füllung od. dgl. zur Bedämpfung von auftretenden Raumresonanzen vorgesehen sein.

Dieser Akustikkoppler 20' dient zur Messung der vom Hörteil 13 des Handapparats 11 abgegebenen akustischen Signale. Dadurch wird der Frequenzgang der Hörkapsel bestimmt und es erfolgt die Messung einer mit der Empfangsbezugsdämpfung ähnlichen Größe. Die Besonderheit ist, daß hier sowohl das Meßmikrofon 55 als auch die zugehörige Elektronik 41', 40' in den Koppler 20' mit integriert sind. Der vom Hörteil 13 abgegebene Schalldruck wird aufgenommen und über die Schaltung verstärkt an das Auswertegerät 14 über die Leitung 19' weitergegeben. Je nach der Höhe der zu erwartenden Meßsignalgröße kann die Verstärkung der vom Mikrofon 55 beaufschlagten elektronischen Bauteile 41' vom Auswertegerät 14 umgeschaltet werden.

Beide Akustikkoppler 20, 20' werden in übereinstimmender Weise mit dem bereits erwähnten Band 60 an ihren Sprech- bzw. Hörteil 12, 13 festgeschnallt. Dazu ist, wie Fig. 2 zeigt, das eine Bandende 63 am Gehäuse fest. Das andere 64 ist in eine Schlaufe 65 gelegt, die eine am Gehäuse angeformte Öse 66 durchsetzt. Dadurch wird die Spannkraft des Bandes 20 an dieser Stelle halbiert und mindert dadurch die auf den Bandverschluß 61, 62 ausgeübte Festhaltekraft. Das Band 60 wird hier durch einen Klettverschluß festgehalten, bestehend aus Widerhaken 62 in einem Bandabschnitt und Schlaufen 61 in einem anderen Abschnitt.

Zur Befestigung wird zunächst der entsprechende Teil 12, 13 des Handapparats 11 auf den Moosgummiring 33 gesetzt und dann das Band 60 darumgelegt. Es genügt dazu die Schlaufe 65 an der Öse 66 etwas größer zu ziehen, ein Entschlaufen der Öse 66 ist nicht erforderlich. Dann wird am freien Bandende 64 gezogen, bis die gewünschte Spannung erzielt ist. An der Bandunterseite befindet sich eine Gummischicht 67 od. dgl., die für einen guten Reibungsschluß mit dem aufgesetzten Handapparat 11 sorgt. Das festgespannte Ende 64 wird gegen den den Handapparat 11 umgürtenden Bandbereich gedrückt, wodurch die beiden Klettverschlußhälften 61, 62 fixierend ineinander greifen. Die Akustikkoppler 20, 20' mit ihren Bestandteilen 21, 21', 16, 18, 47 sind aus Kunststoff erzeugt.

Bezugszeichenliste:

    10 Fernsprechapparat
    11 Handapparat
    12 Sprechteil von 11
    13 Hörteil von 11
    14 Auswertegerät
    15 Anschlußstelle für 10
    16 Gehäuse, Endgehäuse
    17 Mantelwand, Gehäuseteil
    18 Abschlußdeckel, Gehäuseteil
    19, 19' Verbindungsleitung zu 20 bzw. 20'
    20, 20' Akustikkoppler
    21, 21' Prüfmuschel
    22 Schallsender
    23 Muschelöffnung
    24, 24' Druckkammer
    25 Bodenwand von 21
    26 Längsachse
    27 Gitterwerk
    28 Trennwand, Ebene
    29 Schlitz
    30 Referenzmikrofon
    31 Meßöffnung von 30
    32, 32' Ringbereich, Anlagefläche
    33, 33' Anlagering bei 32 bzw. 32'
    34 Aufsatz
    35 Wandzone, Montagering

36 Druckausgleichskanal
37 Schalldämmwerkstoff
38 Gehäuseinneres
39 Durchbruch in 27 für 30
40, 40′ Leiterplatte
41, 41′ elektronische Bauteile für 40 bzw. 40′
42 Verformungspfeil von 33
43 Steckverbindung
44 Radialdurchbruch
45 Absatz von 35
46 Gehäuseoberteil
47 Gehäuseunterteil
48 Gehäuseraum
49, 49′ Kabelzugentlastung
50 U-förmige Platine
51 Scheitelsteg von 50
52 kurzer Schenkel von 50
53 langer Schenkel von 50
54 elektronische Bauteile für 30
55 Meßmikrofon
56 Dämmwerkstoff
57 Stehbolzen
58 Anschlußbuchse an 40′
59 Stecker
60 Verbinder, Band
61 Klettenverschlußteil
62 Klettenverschlußteil
63 Bandende von 60
64 Bandende von 60
65 Schlaufenform von 60
66 Öse
67 Gummischicht

**Ansprüche**

1. Vorrichtung zur Prüfung der elektroakustischen Übertragungseigenschaften von Fernsprechapparaten (10) mit zugehörigem Handapparat (11), umfassend ein Auswertegerät (14) mit einer Anschlußstelle (15) für den Fernsprechapparat (10), sowie mit einem akustische Prüfsignale aufnehmenden Schallempfänger (55) für den Hörteil (13) des Handapparats (11) sowie mit einem akustische Prüfsignale abgebenden Schallsender (22) für den Sprechteil (12) des Handapparats (11) und mit einem Referenzmikrofon (30) zur Voreinstellung des Schallsenders (22), welches bei jeder Frequenz des Prüfsignals die Abweichung der Betriebsgröße von einem vorgegebenen Richtwert feststellt und dem Auswertegerät (14) meldet, und daraufhin das Auswertegerät (14) frequenzweise eine die jeweilige Abweichung kompensierende Regelgröße für den Betrieb des Schallsenders (22) liefert,
**dadurch gekennzeichnet,**
daß eine den Schallsender (22) beinhaltende Prüfmuschel (21) mit ihrer Muschelöffnung (23) im Prüffall an den Handapparat (11) andrückbar ist, den Sprechteil akustisch abdichtend umgrenzt und dabei zwischen dem Sprechteil (12) und dem Schallsender (22) eine Druckkammer (24) erzeugt und daß das Referenzmikrofon (30) im Inneren der Druckkammer (24) angeordnet ist und die von ihm festgestellte Abweichung nicht nur von den Eigenschaften des Schallsenders (22), sondern auch von der gegebenen Form der Druckkammer (24) abhängig ist.

2. Vorrichtung nach Anspruch 1, dadurch gekennzeichnet, daß die Regelung des Schallsenders (22) über das Referenzmikrofon (30) unabhängig, insbesondere zeitlich vor der Vermessung eines zu prüfenden Sprechteils in der Druckkammer (24) erfolgt.

3. Vorrichtung nach Anspruch 2, dadurch gekennzeichnet, daß die zur vorausgehenden Kalibrierung eines Schallsenders (22) verschiedener Type frequenzweise erforderlichen Regelgrößen im Auswertegerät (14) speicherbar und zur Vermessung eines Sprechteils (12) daraus abrufbar sind.

4. Vorrichtung nach Anspruch 1, dadurch gekennzeichnet, daß sowohl die Regelung des Schallsenders (22) über das Referenzmikrofon (30) als auch die Vermessung eines zu prüfenden Sprechteils (12) in der Druckkammer gleichzeitig erfolgen.

5. Vorrichtung nach einem oder mehreren der Ansprüche 1 bis 4, dadurch gekennzeichnet, daß der Schallsender (22) diskontinuierlich in diskreten Frequenzen arbeitet.

6. Vorrichtung nach einem oder mehreren der Ansprüche 1 bis 5, dadurch gekennzeichnet, daß der Richtwert zur Regelung des Schallsenders (22) ein über die ganze Bandbreite der Prüfsignalfrequenzen konstanter Schalldruck ist.

7. Vorrichtung nach einem oder mehreren der Ansprüche 1 bis 6, dadurch gekennzeichnet, daß das Referenzmikrofon (30) ein fester Bestandteil der Prüfmuschel (21) ist.

8. Vorrichtung nach Anspruch 7, dadurch gekennzeichnet, daß der Schallsender in eine Wand, vorzugsweise in die Bodenwand (25), der Prüfmuschel (21) integriert ist, während das Referenzmikrofon (30), insbesondere dazu koaxial, nahe dem Sprechteil (12) angeordnet liegt.

9. Vorrichtung nach einem oder mehreren der Ansprüche 1 bis 8, dadurch gekennzeichnet, daß der Schallsender (22) einerseits und der Sprechteil (12) andererseits in der Druckkammer (24) einander gegenüberliegen und das Referenzmikrofon (30) mit seiner Meßöffnung (31) vorzugsweise dem Sprechteil (12) zugekehrt ist.

10. Vorrichtung nach einem oder mehreren der Ansprüche 1 bis 9, dadurch gekennzeichnet, daß die Druckkammer (24) von einem Gitterwerk (27) durchsetzt ist, das den Schallsender (22) gegenüber dem Sprechteil (12) abteilt.

11. Vorrichtung nach Anspruch 10, dadurch gekennzeichnet, daß das Gitterwerk (27) in einer Ebene (28) angeordnet ist, die vorzugsweise parallel zum Schallsender (22) verläuft.

12. Vorrichtung nach Anspruch 10 oder 11, dadurch gekennzeichnet, daß das Referenzmikrofon (30) zwar im Bereich des Gitterwerks (27) angeordnet ist, aber mit seiner Meßöffnung (31) frei nach der dem Sprechteil (12) zugekehrten Seite des Gitterwerks (27) weist.

13. Vorrichtung nach einem oder mehreren der Ansprüche 10 bis 12, dadurch gekennzeichnet, daß das Gitterwerk (27) aus einer Trennwand mit einer Schar von zueinander sternförmig angeordneten Schlitzen (29) besteht und in der Sternmitte ein Durchbruch (39) zur Aufnahme des Refe renzmikrofons (30) vorgesehen ist.

14. Vorrichtung nach einem oder mehreren der Ansprüche 1 bis 13, dadurch gekennzeichnet, daß der die Muschelöffnung (23) umgrenzende, der Anlage des Sprechteils (12) dienende Ringbereich (32) verformbar (42) ist und sich selbsttätig dem Relief des jeweils angedrückten Handapparats (11) anpaßt.

15. Vorrichtung nach Anspruch 14, dadurch gekennzeichnet, daß der Anlagering (33) aus einem formelastischen Material, insbesondere aus Moosgummi, besteht.

16. Vorrichtung nach Anspruch 14 oder 15, dadurch gekennzeichnet, daß der Anlagering (33) Bestandteil eines von der Prüfmuschel (21) ablösbaren Aufsatzes (34) ist.

17. Vorrichtung nach einem oder mehreren der Ansprüche 1 bis 16, dadurch gekennzeichnet, daß der Aufsatz (34) der Prüfmuschel (21) entsprechend der Bautype des zu prüfenden Handapparats (11) auswechselbar ist.

18. Vorrichtung nach einem oder mehreren der Ansprüche 1 bis 17, dadurch gekennzeichnet, daß Druckausgleichskanäle (36) im Bereich des Anlagerings (33) bzw. des Aufsatzes (34) die Druckkammer (24) mit der Umgebung verbinden.

19. Vorrichtung nach einem oder mehreren der Ansprüche 1 bis 18, dadurch gekennzeichnet, daß hinter ihrer den Schallsender (22) aufweisenden Wand (25) die Prüfmuschel (21) ein in sich geschlossenes Gehäuse (Endgehäuse 16), aufweist und hinter dem Schallsender (22) vorzugsweise Schalldämmwerkstoffe (37) im Gehäuseinneren (38) angeordnet sind.

20. Vorrichtung nach Anspruch 19, dadurch gekennzeichnet, daß im Gehäuseinneren (38) eine Leiterplatte (40) mit elektronischen Bauteilen (41) zum Betrieb des Schallsenders (22) und/oder des Referenzmikrofons (30) angeordnet ist.

21. Vorrichtung nach Anspruch 20, dadurch gekennzeichnet, daß die Leiterplatte (40) im wesentlichen parallel zur Ebene des Schallsenders (22) liegt.

22. Vorrichtung nach einem oder mehreren der Ansprüche 1 bis 21, dadurch gekennzeichnet, daß eine Platine (50) als Träger für das Referenzmikrofon (30) dient und die Platine (50) mit einem Abschnitt (51) die Druckkammer (24) durchsetzt.

23. Vorrichtung nach Anspruch 22, dadurch gekennzeichnet, daß die Platine (50) wenigstens einendig (52) mit der Leiterplatte (40) verbunden ist, vorzugsweise über eine sowohl elektrische als auch mechanisch wirksame Steckverbindung (43).

24. Vorrichtung nach Anspruch 22 oder 23, dadurch gekennzeichnet, daß die Platine (50) ihrerseits elektronische Bauteile (54), vorzugsweise zum Betrieb des Referenzmikrofons (30), trägt, wie RC-Glieder.

25. Vorrichtung nach einem oder mehreren der Ansprüche 21 bis 24, dadurch gekennzeichnet, daß das Endgehäuse (16) Führungsteile zum Einstekken und Halten der Platine (50) besitzt, wie Radialdurchbrüche (44) oder Leitrippen.

26. Vorrichtung nach einem oder mehreren der Ansprüche 21 bis 25, dadurch gekennzeichnet, daß die Platine (50) im wesentlichen in einer Vertikalebene zur Leiterplatte (40) verläuft.

27. Vorrichtung nach einem oder mehreren der Ansprüche 21 bis 26, dadurch gekennzeichnet, daß die Platine (50) in einer diametralen Ebene in der Druckkammer (24) und ggf. im Gehäuseinneren (38) des Endgehäuses (16) angeordnet ist.

28. Vorrichtung nach einem oder mehreren der Ansprüche 1 bis 27, dadurch gekennzeichnet, daß eine den Schallempfänger (25) beinhaltende weitere Prüfmuschel (21') mit ihrer Muschelöffnung an den Handapparat (11) andrückbar ist, den Hörteil (13) akustisch dichtwirksam umgrenzt und dabei zwischen dem Hörteil (13) und dem Schallempfänger (55) eine Druckkammer (24') erzeugt.

29. Vorrichtung nach Anspruch 28, dadurch gekennzeichnet, daß die Prüfmuschel (21') hinter ihrer den Schallempfänger (55) aufweisenden Wand ein in sich geschlossenes Gehäuse (Endgehäuse 46, 47) aufweist, worin eine weitere Leiterplatte (40') mit elektronischen Bauteilen (41') zum Betrieb des Schallempfängers (55) angeordnet ist.

30. Vorrichtung nach einem oder mehreren der Ansprüche 1 bis 29, dadurch gekennzeichnet, daß die zum Auswertegerät (14) führenden Verbindungsleitungen (19, 19') mit ihren Kabel-Zugentlastungen (49,49') jeweils zwischen zwei Gehäuseteilen (17, 18;46,47) des Endgehäuses (16) befestigt sind.

31. Vorrichtung nach einem oder mehreren der Ansprüche 1 bis 30, dadurch gekennzeichnet, daß die ggf. mit einem Endgehäuse (16 bzw. 46,47) ausgerüstete Prüfmuschel (21 bzw. 21′) über einen lösbaren Verbinder (60) mit Andruck am Sprechteil (12) bzw. Hörteil (13) des Handapparats (11) befestigbar ist.

32. Vorrichtung nach Anspruch 31, dadurch gekennzeichnet, daß der Verbinder aus einem Band (60) mit einem Bandverschluß (61,62) besteht.

33. Vorrichtung nach Anspruch 31 oder 32, dadurch gekennzeichnet, daß das Band mit seinem einen Bandende (63) fest an der Prüfmuschel (21) bzw. dem Endgehäuse (16) angebracht ist, mit seinem anderen Bandende (64) in Schlaufenform (65) eine Öse (66) an der Prüfmuschel (21) bzw. am Endgehäuse (16) durchsetzt sowie den Bandverschluß (61,62) trägt.

34. Vorrichtung nach einem oder mehreren der Anschlüsse 31 bis 33, dadurch gekennzeichnet, daß der Bandverschluß aus einem stufenlos wirksamen Klettverschluß (61,62) besteht.

EP 0 392 166 A2

FIG. 1

FIG. 2

# FIG. 3

# FIG. 4